# EUROPEAN PATENT SPECIFICATION

(11) **EP 1 914 338 B1**
(45) Date of publication and mention of the grant of the patent: **09.12.2009**
(21) Application number: 06122622.1
(22) Date of filing: 19.10.2006
(51) Int. Cl.: D06F 37/26

(54) **Improved construction method of the drum/tub assembly of a washing machine**
Konstruktionsverfahren für eine Trommel-/Laugenbehälteranordnung einer Waschmaschine
Procédé amélioré de construction d'un ensemble d'un tambour/ une cuve de une machine à laver

(43) Date of publication of application: 23.04.2008
(73) Proprietor: Electrolux Home Products Corporation N.V., 1930 Zaventem (BE)
(72) Inventor: Zanello, Fabio, 33170, Pordenone (IT); Brovedani, Vittorio, 31025, Santa Lucia Di Piave (Treviso) (IT); Buso, Danny, 33080, San Quirino (Pordenone) (IT)
(74) Representative: Baumgartl, Gerhard Willi

(56) References cited:
- EP-A- 1 428 924
- EP-A- 1 522 624
- EP-A- 1 659 204
- EP-A2- 0 219 115
- US-A1- 4 423 540

## Description

The invention refers to a construction and assembly method of the tub-hub- ball bearings-drum arrangement of an household washing machine, both top- and front-loading but having an horizontal or inclined axis, and provided with a plastic tub, which is particularly advantageous from the point of view of the factory producibility and of the related burdens.

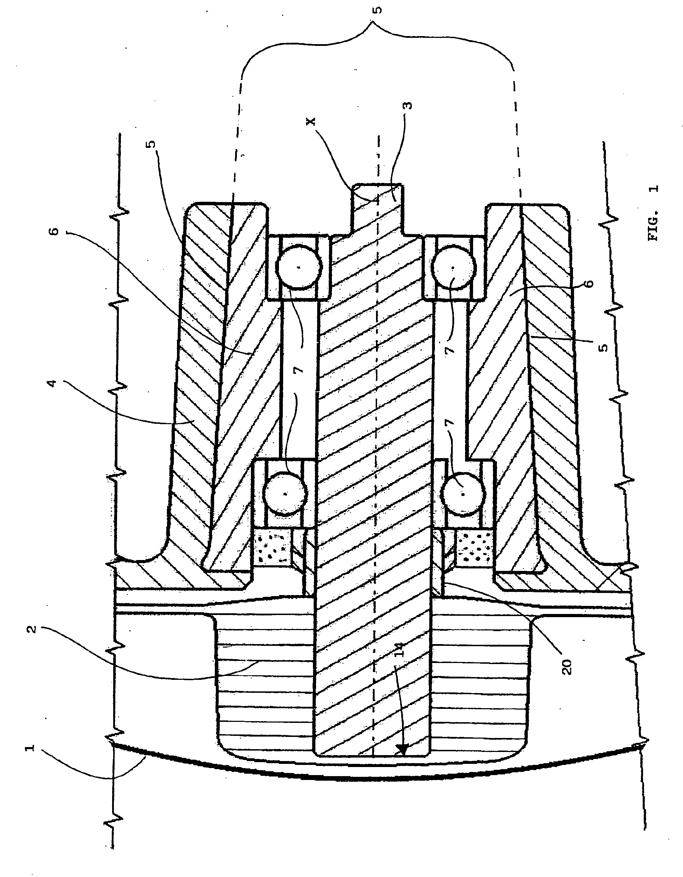

With ref. to fig. 1, household washing machines are known, whose washing load is placed into a rotating drum having horizontal axis 1, which is sustained by a respective spider **2**; this one is in its turn engaged in a known manner on the head of a rotating and horizontal shaft 3.

Said drum 1 is contained into a tub 4, which is generally hermetically sealed, and provided on a vertical side of it with an aperture 5, across which said rotating shaft 3 is made to pass, from the outside towards said spider 2 of the drum.

In order to better lodge said shaft 3 into said aperture 5 of the drum, this aperture itself is equipped with a proper cylindrical hub 6, i. e. a cylindrical and internally hollow element which is placed on the internal cylindrical surface of said aperture.

Inside said hub two ball bearings 7 are normally mounted, which are properly separated and sized in order to support said rotating shaft 3.

The reference prior art is clearly explained in fig. 1 of the Italian utility Model No. PN2006U000022, filed on May 31, 2006, of the same Applicant, to which it is referred for sake of brevity.

In order to make up the tub/drum assembly according to the cited prior art, a construction method is carried out which basically comprises the following steps, performed one at a time, even if not in a rigorous course, as others and different steps may be introduced, as transportation, handling, various intermediate working operations, etc.
1) Hub insertion on a proper position into the injection mould of the plastic tub,
2) moulding of the plastic tub through over-injection of it on the hub previously positioned,
3) tub extraction and related transfer to a working station, where the ball bearings insertion is being made, which is usually carried out, usually by pounding , inside the hub,
4) grease injection to seal the passage between the washer and a bushing on the shaft,
5) washer mounting,
6) mounting of the bushing 20,
7) drum insertion, followed by the shaft insertion into said ball bearings.

The sequence of the described operations may be carried out in a wholly automatic way, with exception of the step 2), i. e. the insertion of the ball bearings, which requires that the tub, after having been extracted out of the mould, is transferred in a proper working station out of the production line.

In the facts it is here reminded and cleared that the assembly operations on the tub and on the drum are automatically carried out in a suitable assembly line, with exception of just the ball bearings mounting.

The described method however does show some drawbacks:
- the first one resides in the fact that the ball bearings have to be mounted in the hub after the tub moulding, and this requires a working operation which has to be carried out on the tub, and therefore in the same production factory; then this prevents any production flexibility, for instance there is no possibility to carry out the mounting by an outer source, as a supplier which can possibly be cheaper, the ball bearings into the hub, and subsequently to assemble this hub, together with its ball bearings, in a suitable working operation on the production line.
- the second drawback depends on the fact that the mounting of the ball bearings has to be carried out in a specific working station, which is independent and external of the assembly line; an additional operation has then to be planned and carried out, which requires that the tubs have to be moved away, with apparent disadvantages in the production course, even due to the fact that said tubs do show a large outer encumbrance, and therefore they cause serious logistics and transportation problems.
   From EP 0 219 115 it is divulged a method for making a plastic laundering tub for a laundry washing machine, in which said tub is adapted to contain a rotatable drum supported by bearings mounted in a sleeve pasting through a respective end wall of the tub.
   The method is characterized in that the sleeve is made separately from the tub by injection moulding of a plastic material in two successive moulds, and that sleeve is subsequently placed into a third mould for injection-moulding thereabout another plastic material.
   However the problem of the correct centering and equilibrating the bearings inside the sleeve (also called: hub), remains still no solved.

It would be then desirable, this being the purpose of the present invention, of implementing a production method able of make up in a continuous assembly line a plastic tub and a drum inside it, so as to avoid the above described problems and using basically the same production means.

This purpose will be described and obtained implementing a specific production method according to the description that is given below by way of the non-limiting example with reference to the accompanying drawings, in which:
- figures 2A and 2B show symbolically a representation of the hub and of the related ball bearings respectively before and after their assembly,
- fig. 2C shows a simplified symbolically exploded view of the tub and of its hub, on which said tub is moulded, and of the respective moulding die in which said tub is formed by injection,
- figures 3A and 3B symbolically show a representation of a first embodiment of a test arrangement of the tub made according to the invention, respectively before and during the test implementation,
- figures 4A and 4B symbolically show a representation of a second embodiment of a test arrangement of the tub made according to the invention, respectively before and during the test implementation,

In the following of this description it will be referred to a generic horizontal axis washing machine, but it will be intended that the present invention can be identically applied both to a front loading and to a top loading washing machine.

With reference to fig. 1, an household washing machine according to the prior art comprises:
- a rotating drum 1, into which the washing load is being introduced, and supported by a spider 2 able of holding up in a firm way said rotating drum, said spider being connected by a rotating shaft 3 solidly engaged to it, and able of driving it into rotation,
- a washing tub 4 which conventionally contains both the drum and the related spider, and a portion of said shaft 3 passing across an opening 5 made on a vertical wall of said tub.

As previously said, said tub is made up through a conventional method of plastic over-injection on a cylindrical hub 6 so as, when the already formed tub is being extracted out of the injection mould, it already embodies said hub.

Only after the above operation the ball bearings are being inserted. What above is well known in the prior art.

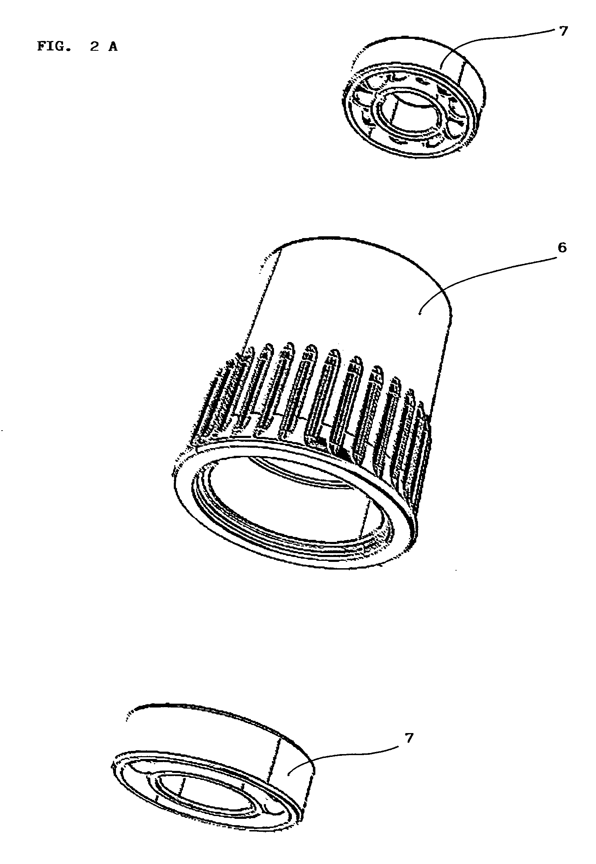

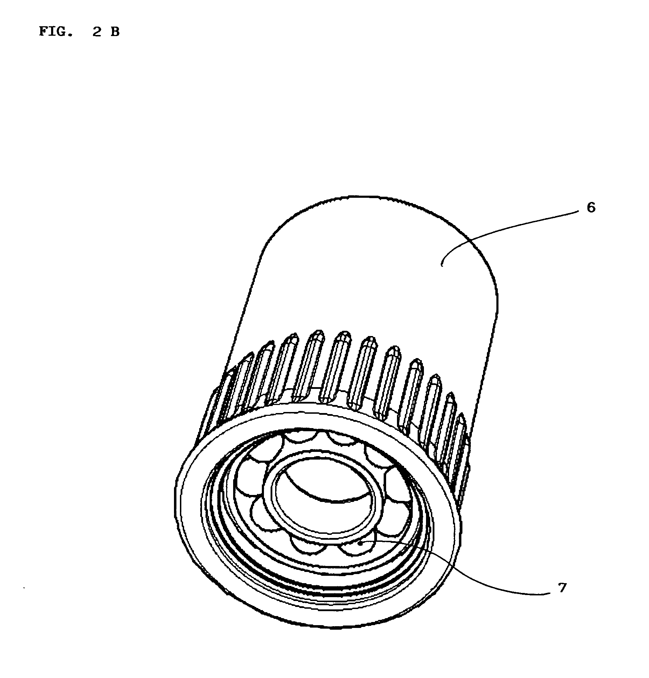

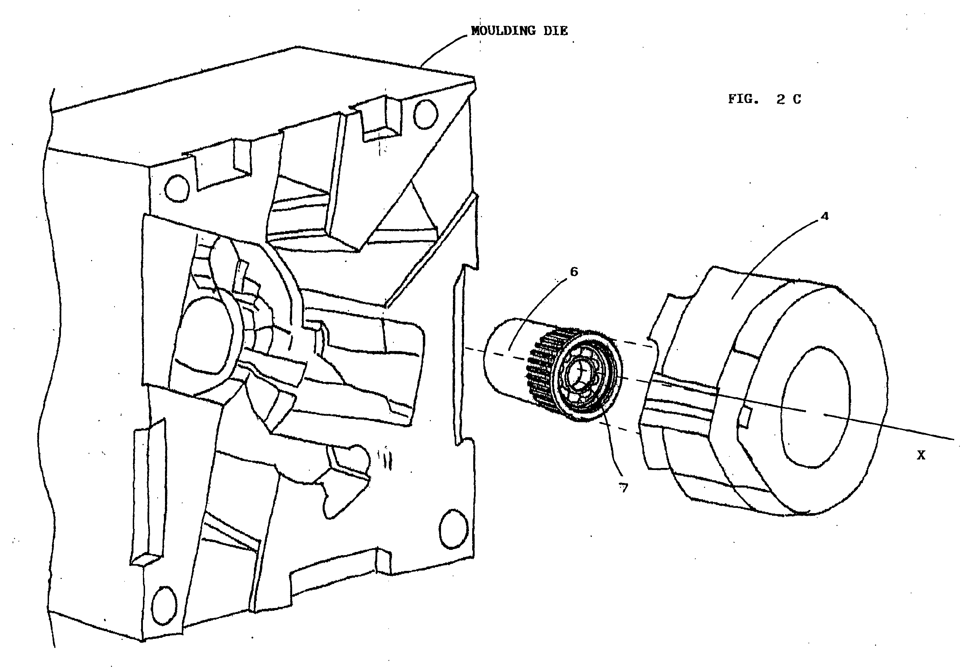

With ref. to figures 2A and 2B, the insertion of the ball bearings 7 into the hub 6 is first carried out, and only after such operation said hub, confined into the right position, and obviously already together with the ball bearings, is being inserted into the moulding die for the plastic over-injection forming the tub around said hub (fig. 2C).

After such operations, which are performed in the just described sequence, the remaining working operations, as previously defined and identified by the numbers from 4 on, are carried out in the same sequence.

The operation of insertion of the ball bearing into the hub is no more an operation which must be performed off the tub production line, even if on the already moulded tub; differently from that it is a working operation which must be performed first, and in a fully independent way of what happens on the assembly line itself, so avoiding of interrupting the orderly sequence of the working steps along the tub assembly line.

At this time it will be clear to the man skilled in the art that such benefit may be used on different ways:
a) the first way consists in the implementation of the coupling between the hub and the ball bearings in a working station which is far away, and particularly under the responsibility and costs of other productive entities, for instance by outsourcing. To be absolutely clear it is meant that the hub, the ball bearings and their coupling can be produced by third Companies, which then sell this sub-assembly as a normally purchased component; a further possibility is to transfer to a third supplier the operation of coupling only (as an "outsourced working"), according to the opportunities.
   Such circumstance may bring to remarkable advantages in the costs, without additional burdens in the logistics as the hub volume is in any case quite smaller of the tub volume, and moreover its volume doesn't change even if the respective ball bearings are being inserted.
b) the second way consists in the coupling between the ball bearings and the hub in the same factory injecting the plastic tub; such a possibility eliminates the need of carrying out a specific working station along the tub assembly line, with apparent benefits both in the continuity and uniformity of the production flow, and in the logistics; as a matter of facts, due to the tub size, together with the need of providing in any case some "buffer " areas before and after the operation of the ball bearing insertion, wide storing areas and related logistics burdens would be requested, which instead are spared with this invention.
Up to know the prior art has been here described.

The instant invention allows a particularly advantageous benefit in the final assembly quality; as a matter of facts, after the over-injection operation of the tub on the hub, which is already provided with the ball bearings, it may be provided an additional operation of quality control on the correct working of the assembled ball bearings; such an operation, which can be performed on the assembly line itself, consists in checking that the ball bearings rotation is implemented in a regular manner, and specifically without vibrations.

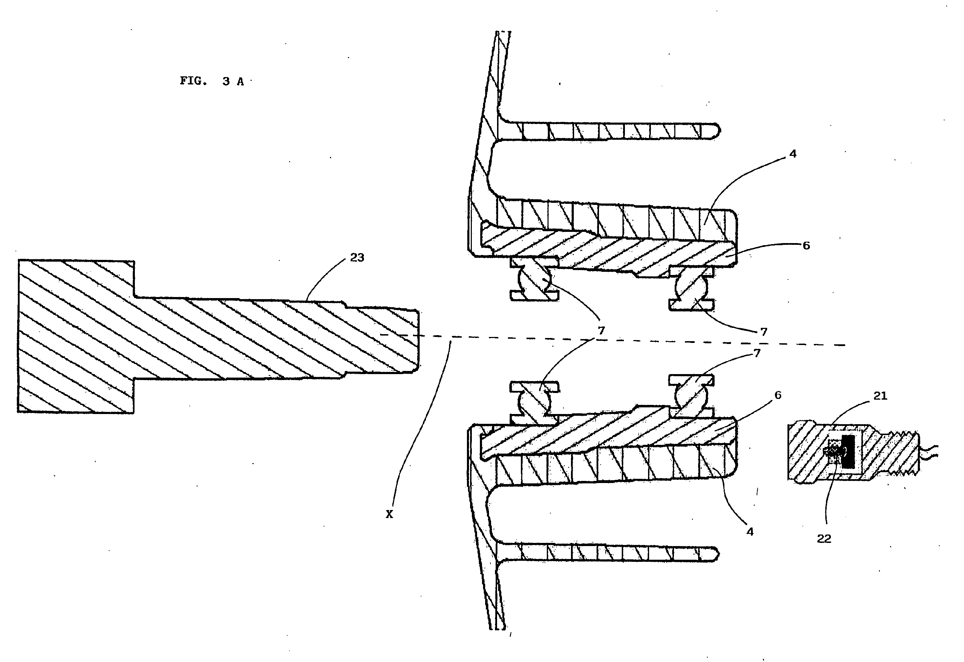

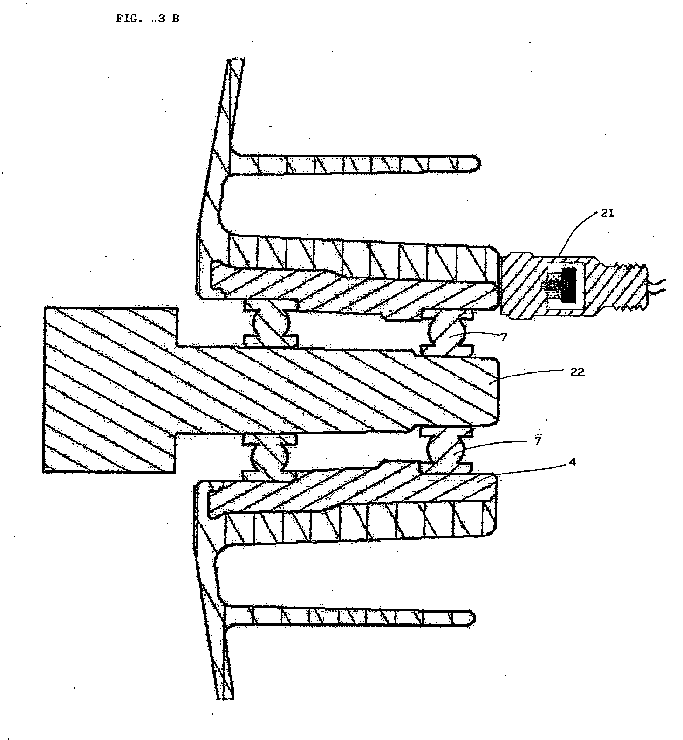

In the facts it may result that during the moulding of the tub plastic around the hub, some asymmetries in the ball bearing position are formed, or some damage is caused (due to the fact that, in order to block the hub/ball bearings assembly in the mould, i. e in a proper support working as an hub-holder, it needs to center said assembly with a suitable tool, preferably a centering pin, which uses as a reference the same inner ring of the ball bearing itself); with ref. to figures 3A and 3B, in order to detect such possible asymmetries, according to the invention, an additional control station is arranged, which comprises a tracer point 21 and associated suitable devices, as a mandrel 23 or a conical shaft, to control the rotation.

The test method consists in a first step (Fig. 3A) wherein, after the over-injection of the tub over the hub 6, a rotating mandrel 23 is approached and aligned on the axis "X" of said ball bearings 7, and introduced into said ball bearings, while the tracer point 21, provided with an accelerometer 22, is approached on the other side of said hub 6 (fig. 3A), and finally placed into contact with it.

The second step (fig. 3B) consists in driving said hub into rotation, exemplarily at a speed around 1500 rpm, by said mandrel 23, while said accelerometer 22, lodged inside said tracer point 21, detects and measures the possible vibration, and its amount, of said hub, and so indirectly it detects and measures the vibration generated by possible irregularities of said ball bearings.

Said vibrations are then transformed into an electric signal which is being transmitted to suitable command and control means of the same additional control station, not shown.

The implementation and the operation of such a control station 20 as described is generally well known in the art, and therefore it will be not explained.

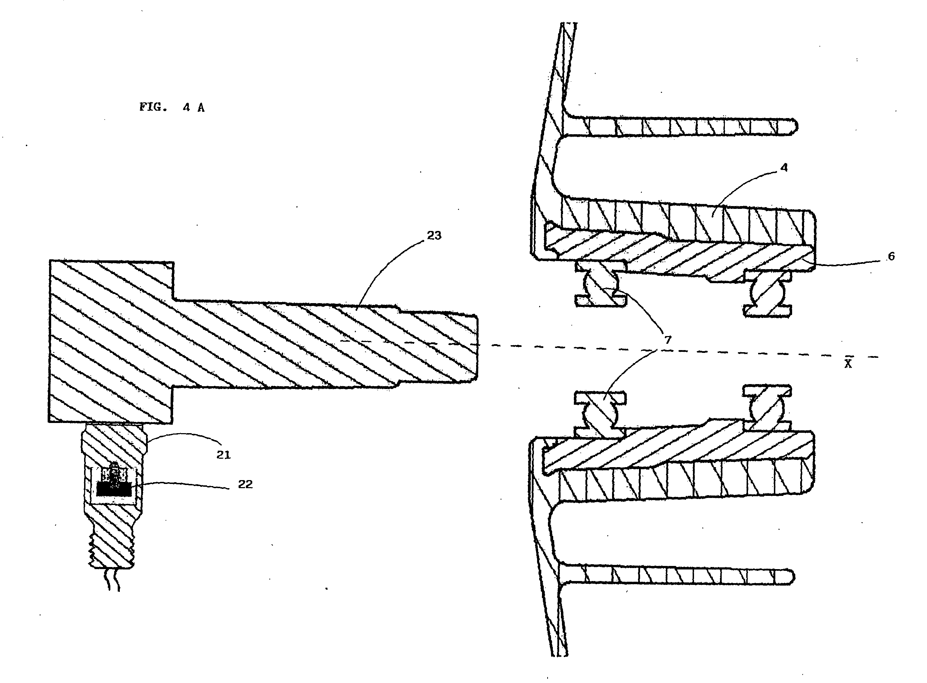

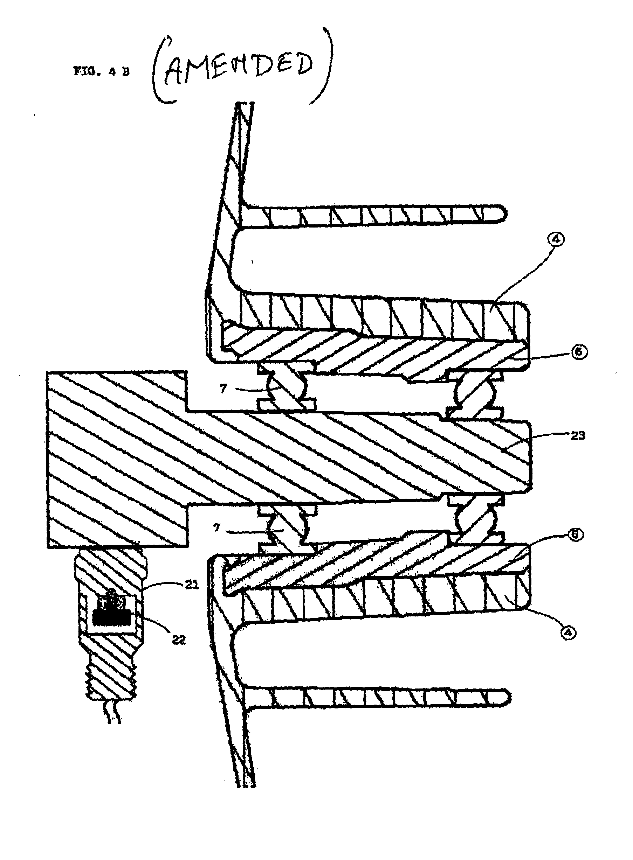

A second embodiment of this method is represented in the figures 4A and 4B, wherein the difference consists in that the tracer point 21 is placed into contact with the mandrel 23 itself, instead that with the hub 6.

The benefit of such arrangement resides in the fact the vibrations are more faithfully detected and measured, even if a suitable coupling between said standing tracer point 21 and the rotating mandrel 23 has to be provided.

## Claims

1. Production and assembly method of the tub and of the related drum of an household washing machine, both top and front loading, comprising:
- a perforated rotating drum (1) apt to contain the washing load,
- a spider apt to solidly support said rotating drum,
- a rotating shaft (3) engaged to said spider and apt to drive it into a rotating motion,
- a tub (4) into which said drum and the related spider are contained, and provided with a cylindrical aperture (5) apt to let said rotating shaft to pass across,
- a hub (6) applied on the inner side of said cylindrical aperture (5),
- at least one ball bearing (7, 7A) engaged on the inner side of said hub and apt to support said rotating shaft (3),
- sealing means (33) applied on the inner side of that tub portion on which said aperture is made,
- said method comprising the following steps, which can be performed even not subsequently:
A) hub insertion in a proper position inside the over-injection mould of the plastic tub,
B) Moulding of the plastic tub through over-injection on the previously positioned hub,
C) Ball bearings insertion into said hub,
D) Sealing grease injection on the gasket, to seal the gap between the gasket and a bushing on the shaft,
E) Gasket insertion,
F) Insertion of the drum shaft into said ball bearings, and successive mounting of the drum into said tub,
wherein the insertion operation (C) of the ball bearing into said hub (6) precedes the insertion of said hub in a suitable position into the over-injection mould, which in its turn precedes the moulding (B) of said tub by its over-injection on said hub,
**characterized in that**, following said moulding by over-injection (B), a check operation is performed on said ball bearings applied into said hub (6), consisting in the detection of the vibration exceeding a pre-defined level, when said ball bearings are properly driven into rotation.

2. Production and assembly method according to claim 1, **characterized in that** said vibration detection comprises the step of introducing a rotating device (23) into said ball bearings (7), and of driving them into rotation, while the relevant vibration is being detected by suitable sensing means, preferably a tracer point (21), lodging a relevant accelerometer (22).-

3. Production and assembly method according to claim 2, **characterized in that** said means able of detecting the ball bearings vibrations are placed into contact either with said hub (6), or with said rotating device (23).-

## Patentansprüche

1. Produktions- und Montageverfahren des Laugenbehälters und der zugehörigen Trommel einer Haushaltswaschmaschine vom Top- und Frontladertyp, Folgendes umfassend:
- eine perforierte Rotationstrommel (1), die zur Aufnahme des Waschguts geeignet ist,
- ein Drehkreuz, das zur festen Unterstützung der Rotationstrommel geeignet ist,
- eine Rotationswelle (3), die mit dem Drehkreuz verbunden und geeignet ist, dieses in eine Rotationsbewegung zu versetzen;
- einen Laugenbehälter (4), der die Trommel und das zugehörige Drehkreuz enthält, und der mit einer zylindrischen Öffnung (5) versehen ist, die so ausgeführt ist, dass sich die Rotationswelle darüber hinweg bewegen kann,
- eine Nabe (6), die an der Innenseite der zylindrischen Öffnung (5) angebracht ist,
- mindestens ein Kugellager (7, 7A), das an der Innenseite der Nabe angebracht ist und geeignet ist, die Rotationswelle (3) zu tragen,
- Dichtungsmittel (33), die an der Innenseite jenes Laugenbehälterteils angebracht sind, an dem die Öffnung vorgesehen ist,
- wobei das Verfahren folgende Schritte umfasst, die auch nicht aufeinander folgend ausgeführt werden können:
A) Einführen der Nabe in eine geeignete Position innerhalb des Überspritzformteils (Over-Injection-Form) des Kunststoff-Laugenbehälters,
B) Formen des Kunststoff-Laugenbehälters durch Überspritzformen (over-injection) auf die vorher positionierte Nabe,
C) Einführen des Kugellagers in die Nabe,
D) Einspritzen von Dichtfett auf die Dichtung, um den Zwischenraum zwischen der Dichtung und einer Laufbuchse auf der Welle abzudichten,
E) Einsetzen der Dichtung,
F) Einsetzen der Trommelwelle in die Kugellager und anschließende Montage der Trommel in dem Laugenbehälter,
wobei der Einsetzvorgang (C) des Kugellagers in die Nabe (6) dem Einsetzen der Nabe in einer geeigneten Position in dem Überspritzgießformstück vorangeht, das wiederum dem Formen (B) des Laugenbehälters durch dessen Überspritzformen (overinjection) auf der Nabe vorangeht,
**dadurch gekennzeichnet, dass** im Anschluss an die Formung durch Überspritzformen (B) auf die in der Nabe (6) angebrachten Kugellager ein Prüfvorgang durchgeführt wird, der aus der Feststellung einer über ein definiertes Maß hinausgehenden Vibration besteht, wenn die Kugellager auf angemessene Weise in Rotation versetzt werden.

2. Produktions- und Montageverfahren gemäß Anspruch 1, **dadurch gekennzeichnet, dass** die Vibrationsfeststellung den Schritt der Einführung einer Rotationsvorrichtung (23) in die Kugellager (7) umfasst, und das Versetzen derselben in Rotation, während die relevante Vibration durch geeignete Sensormittel gemessen wird, vorzugsweise durch einen Tastfinger (21), auf dem ein relevanter Beschleunigungssensor (22) angebracht ist.

3. Produktions- und Montageverfahren gemäß Anspruch 2, **dadurch gekennzeichnet, dass** die Mittel zur Feststellung der Kugellagervibrationen in Kontakt mit der Nabe (6) oder mit der Rotationsvorrichtung (23) versetzt werden.

## Revendications

1. Procédé de production et d'assemblage de la cuve et du tambour associé d'une machine à laver domestique, à la fois chargement par le dessus et par l'avant, comprenant :
un tambour de rotation perforé (1) apte à contenir la charge à laver,
un croisillon apte à supporter solidement ledit tambour tournant,
un arbre de rotation (3) en prise avec ledit croisillon et apte à l'entraîner en un mouvement de rotation,
une cuve (4) dans laquelle ledit tambour et le croisillon associé se trouvent, et munie d'une ouverture cylindrique (5) apte à permettre le passage dudit arbre de rotation,
un moyeu (6) appliqué au côté interne de ladite ouverture cylindrique (5),
au moins un roulement à billes (7, 7a) engagé sur le côté intérieur dudit moyeu et apte à supporter ledit arbre de rotation (3),
un moyen d'étanchéité (33) appliqué au côté intérieur de la portion de cuve sur laquelle ladite ouverture est ménagée,
ledit procédé comprenant les étapes suivantes, qui peuvent être exécutées même d'une manière non subséquent
A) insertion du moyeu dans une position appropriée à l'intérieur du moule de sur-injection de la cuve plastique,
B) le moulage de la cuve plastique par sur-injection sur le moyeu positionné préalablement,
C) l'insertion des roulements à billes dans ledit moyeu,
D) injection de graisse d'étanchéité sur la garniture d'étanchéité pour rendre étanche l'espace entre la garniture d'étanchéité et une douille sur l'arbre,
E) insertion de la garniture d'étanchéité,
F) l'insertion de l'arbre de tambour dans lesdits roulements à billes, et montage suivant du tambour dans ladite cuve,
dans lequel l'opération d'insertion C) du roulement à billes dans ledit moyeu (6) précède l'insertion dudit moyeu dans une position appropriée dans le moule de sur-injection, qui précède à son tour le moulage (B) de ladite cuve par sa sur-injection sur ledit moyeu, **caractérisé en ce que** à la suite dudit moulage par sur-injection (B), une opération de vérification est exécutée sur lesdits roulements à billes appliqués dans ledit moyeu (6), consistant en la détection des vibrations dépassant un niveau prédéfini lorsque lesdits roulements à billes sont entraînés correctement en rotation.

2. Procédé de production et d'assemblage selon la revendication 1, **caractérisé en ce que** ladite détection des vibrations comprend l'étape consistant à introduire un dispositif de rotation (23) dans lesdits roulements à billes (7) et à les entraîner en rotation pendant que les vibrations produites sont détectées par un moyen de détection approprié, de préférence un point traceur (21), logeant un accéléromètre associé (22).

3. Procédé de production et d'assemblage selon la revendication 2, **caractérisé en ce que** lesdits moyens aptes à détecter les vibrations des roulements à billes sont mis en contact soit avec ledit moyeu (6) soit avec ledit dispositif de rotation (23).
